# EUROPÄISCHE PATENTSCHRIFT

(11) **EP 4 597 372 B1**
(45) Veröffentlichungstag und Bekanntmachung des Hinweises auf die Patenterteilung: **21.01.2026**
(21) Anmeldenummer: 24155398.1
(22) Anmeldetag: 01.02.2024
(51) Int. Cl.: G06N 3/091, G06N 3/042, G06N 3/098, G06N 3/09, G08B 29/18, G06V 40/10, G06V 10/82, G06V 20/52, G08B 21/02, G08B 13/196

(54) **SICHERHEITSÜBERWACHUNG**
SAFETY MONITORING
SURVEILLANCE DE SÉCURITÉ

(43) Veröffentlichungstag der Anmeldung: 06.08.2025
(73) Patentinhaber: SICK AG, 79183 Waldkirch (DE)
(72) Erfinder: Hammes, Markus, 79117 Freiburg (DE)

(56) Entgegenhaltungen:
- US-A1- 2020 209 867
- US-A1- 2022 366 220
- GODIL AFZAL ET AL: "3D Ground-Truth Systems for Object/Human Recognition and Tracking", 2013 IEEE CONFERENCE ON COMPUTER VISION AND PATTERN RECOGNITION WORKSHOPS, IEEE, 23 June 2013 (2013-06-23), pages 719 - 726, XP032479894, DOI: 10.1109/CVPRW.2013.109

## Beschreibung

Die Erfindung betrifft ein Verfahren und ein Sicherheitssystem zum verteilten Trainieren eines gemeinsamen Kl-Modells für eine Sicherheitsüberwachung eines Betriebsbereichs.

Die heutige Sicherheitstechnik basiert auf klassischen Auswertungen. Dabei ist klassisch der Gegenbegriff zu Verfahren des maschinellen Lernens oder der künstlichen Intelligenz (Kl). Ein Aspekt, der einer Zertifizierung entgegensteht, ist das Fehlen rechtlicher und normativer Grundlagen. In der Sicherheitstechnik sind hohe Anforderungen an die Zuverlässigkeit gestellt und in einschlägigen Normen niedergelegt, die mittels künstlicher Intelligenz realisierte Funktionen bislang nicht zulassen. Die Sicherheitsnormen, etwa die Norm EN13849 für Maschinensicherheit und die Gerätenorm EN61496 für berührungslos wirkende Schutzeinrichtungen (BWS), fordern Maßnahmen wie sichere Hardware oder Funktionsüberwachungen, womit sichergestellt wird, dass Hardwarefehler aufgedeckt werden und die Auswertung so abläuft, wie sie programmiert wurde. In der Absicherungslogik bleibt es bei sehr einfachen Funktionen, die mit deterministischen, analytischen Algorithmen realisiert werden können. Ein bekanntes Beispiel dafür ist eine Überwachung von Schutzfeldern, die von keiner Bedienperson betreten werden dürfen. Andererseits gibt es gerade im Bereich der Bildauswertung Aufgabenstellungen, wie die Objektklassifikation und speziell Personenerkennung, die überhaupt nur mit künstlicher Intelligenz lösbar sind. Solche Funktionen stehen folglich derzeit in sicherheitstechnischen Anwendungen nicht zur Verfügung.

Für eine angestrebte Umsetzung von sicheren Funktionen mittels künstlicher Intelligenz beziehungsweise eines Kl-Modells stellen sich neben den eher formalen Hürden handfeste technische Herausforderungen. Gängige Trainingsansätze benötigen zahlreiche Trainingsbeispiele an einer zentralen Stelle. Dafür müssen vor dem Einsatz des Kl-Modells große Datenmengen aus sehr unterschiedlichen Einsatzbereichen gesammelt, annotiert und hinsichtlich ihrer Vollständigkeit und Ausgewogenheit bewertet werden. Gerade im Hinblick auf die hohen Zuverlässigkeitsanforderungen ist der Aufwand erheblich. Besonders wertvolle Trainingsdaten werden direkt aus dem späteren Anwendungsumfeld gewonnen. Dabei handelt es sich jedoch typischerweise um eine betriebliche Produktionsumgebung oder Logistikumgebung, aus der Daten aus Geheimhaltungsgründen ungern herausgegeben werden, soweit das datenschutzrechtlich überhaupt zulässig wäre. Und selbst wenn die Daten verfügbar würden, wäre eine nachträgliche Annotation äußerst aufwändig und bedürfte der genauen Kenntnis über die jeweilige Erfassungssituation der Daten.

Nach dem Training eines Kl-Modells ist in sicherheitstechnischer Anwendung ein Funktionsnachweis erforderlich, der eine mit den bisherigen Sicherheitsnormen vergleichbare Verlässlichkeit erreicht und damit weit über die übliche Validierung eines herkömmlichen Kl-Modells hinausgeht. Aufgrund der Black-Box-Natur eines Kl-Modells ist ein theoretischer Beweis anhand von Auswertungsalgorithmen nicht möglich. An diese Stelle tretende Freigabetests können teilweise unter Laborbedingungen stattfinden, letztlich ist aber zu erwarten, dass auch vor Ort getestet werden muss. Das wiederum erfordert Zugang zu den Betriebsbereichen, dem häufig erneut Geheimhaltungsgründe und jedenfalls ein erheblicher Zusatzaufwand entgegenstehen.

Weiter zu beachten ist das Problem der Datendrift. Selbst wenn die Trainingsdaten zum Zeitpunkt des Trainings eine vollständige und ausgewogene Repräsentation des realen Betriebsumfeldes darstellen, kann danach aufgrund von schleichenden Veränderungen im Umfeld die Zuverlässigkeit des Kl-Modells nachlassen. Herkömmlich würde hier mit stabilen Detektionsmerkmalen argumentiert, die von einer Datendrift nicht betroffen sind. Bei einem KI-Modell funktioniert das nicht, weil sich das Training die Merkmale selbst aussucht und diese gar nicht bekannt werden.

Im Bereich des maschinellen Lernens ist das Konzept des föderalen Lernens (federated learning) bekannt. Dabei erfolgt das Training dezentral in mehreren Rechenknoten, die auf diese Weise gemeinsam ein robustes Modell aufbauen. Förderales Lernen ist nicht für die Sicherheitstechnik entwickelt und bisher auch nicht dafür vorgeschlagen worden.

Die in der Sicherheitstechnik eingesetzten Sensoren sind häufig optoelektronische Sensoren und darunter zunehmend speziell Kameras, in jüngerer Zeit auch 3D-Kameras. 3D-Kameras gibt es in verschiedenen Technologien, darunter Lichtlaufzeit-, Stereoskopie- und Projektionsverfahren oder plenoptische Kameras. Wie schon erwähnt, werden dabei aber relativ einfache Konzepte verfolgt, wie die Forderung, dass Schutzfelder frei bleiben, und selbst solche klassischen Bildauswertungsverfahren sind schon enorm aufwändig in der Umsetzung. Die EP 3 859 382 A1 schlägt ein Funkortungssystem vor, das einen von einer Person getragenen Funktransponder lokalisiert. Dies wird mit der Positionsbestimmung eines Radars, Ultraschallsensors oder Laserscanners abgeglichen. Eine sichere Personenerkennung ist also erst nach dieser Sensorfusion möglich, und die Auswertung bleibt vollständig klassisch.

Die DE 10 2017 105 174 B4 offenbart ein Verfahren zum Erzeugen von Trainingsdaten für ein künstliches neuronales Netz, bei dem die Bewertung aufgenommener Bilddaten als sicherheitskritisch oder nicht sicherheitskritisch automatisch von einem sicheren Sensor vorgenommen wird. Das löst aber für sich noch keines der eingangs genannten Probleme, da solche Trainingsdaten weiterhin zentral gesammelt werden müssten, die sichere Funktion eines trainierten neuronalen Netzes validiert werden müsste und das neuronale Netz nicht robust gegen Datendrift wäre.

In der US 2021/0063578 A1 wird für ein autonomes Fahrzeug ein tiefes neuronales Netz zur Klassifikation von Objekten eingesetzt. Dabei werden Labels einer Kamera auf Li-DAR-Daten übertragen. In einer langen Aufzählung von Trainingsverfahren wird einmal föderales Lernen erwähnt, ohne dass darauf je nochmals Bezug genommen würde.

Die US 2022/0332335 A1 befasst sich mit der Datenanalyse für Fahrzeuge unter Verwendung von neuronalen Netzen und föderalem Lernen.

Die Arbeit von Godil, Afzal, et al., "3D ground-truth systems for object/human recognition and tracking", Proceedings of the IEEE Conference un Computer Vision and Pattern Recognition Workshops, 2013 beschreibt drei Systeme, mit denen ein "ground truth" für Objektpositionen vorgegeben werden kann, nämlich Ultra-Wide-Band, Indoor GPS und kamerabasierte Bewegungserfassung (motion capture). Es werden dann einige Experimente vorgestellt, in denen Messungen auf diesen "ground truth" bezogen werden.

Die US 2020/0209867 A1 befasst sich mit dem Annotieren oder Labeling von Daten eines autonomen Fahrzeugs. Dabei werden Label von Sensordaten eines Fahrzeugs auf Sensordaten eines anderen Fahrzeugs übertragen.

Die US 2022/0366220 A1 offenbart eine dynamische Anpassung von Gewichten in neuronalen Netzen nach dem Prinzip des föderalen Lernens. Eine Ausführungsform betrifft das autonome Fahren. Die Fahrzeuge sind mit verschiedenen Sensoren und mindestens einer GPU ausgestattet, um Funktionen der künstlichen Intelligenz bereitzustellen beziehungsweise neuronale Netze zu trainieren. Zusätzlich kann ein Fahrerassistenzsystem mit klassischen Verfahren als zweites oder Backup-System bereitstehen. Die Fahrzeuge sind entsprechend dem Prinzip des föderalen Lernens in Kommunikationsverbindung mit einem Cloudserver.

Es ist daher Aufgabe der Erfindung, ein verbessertes Trainingsverfahren für ein in sicherheitstechnischer Anwendung verwendbares Kl-Modell anzugeben.

Diese Aufgabe wird durch ein Verfahren und ein Sicherheitssystem zum verteilten Trainieren eines gemeinsamen KI-Modells für eine Sicherheitsüberwachung eines Betriebsbereichs nach Anspruch 1 beziehungsweise 12 gelöst. Die Begriffe sicher und Sicherheit bedeuten, dass Maßnahmen ergriffen sind, um Fehler bis zu einem spezifizierten Sicherheitsniveau zu beherrschen. Solche Sicherheitsniveaus werden beispielsweise als SIL 1 bis SIL 4 (Sicherheitsanforderungsstufe) oder PL a bis PL e (Performance Level) differenziert. Für den klassischen Fall bedeutet das die Einhaltung von Bedingungen einer einschlägigen Sicherheitsnorm für Maschinensicherheit oder berührungslos wirkende Schutzeinrichtungen. Für Implementierungen von Sicherheitsfunktionen mit künstlicher Intelligenz existieren solche Normen noch nicht, es sind Nachweise einer gleichwertigen Verlässlichkeit zu führen. Ein Kl-Modell ist ein Auswertungsblock oder Computerprogramm, um Eingangsdaten mit einem Verfahren des maschinellen Lernens, insbesondere einem tiefen neuronalen Netz auszuwerten. Föderales Lernen ist als Konzept außerhalb der Sicherheitstechnik an sich bekannt und wurde einleitend kurz erläutert. Als gemeinsames KI-Modell ist ein konsolidiertes Kl-Modell bezeichnet, das durch das verteilte Training erzeugt wird, in Abgrenzung zu lokalen KI-Modellen an den verschiedenen Orten des verteilten Trainings. Ein Betriebsbereich umfasst zumindest eine Maschine oder einen sonstigen Gefahrenbereich beziehungsweise deren Umgebung. Der Betriebsbereich darf aber durchaus weitläufiger sein, beispielsweise Fertigungsstraßen, Gänge und Regale umfassen, bis hin zum sogenannten "plant level", also einer ganzen Fabrik oder Logistikhalle, mit zahlreichen Maschinen, Gefahrenstellen, Sensoren und potentiell sich dazwischen bewegenden Personen. Der Betriebsbereich ist sicherheitsrelevant in dem Sinne, dass prinzipiell Unfälle mit Personen möglich und daher zu verhindern sind.

An mehreren Orten überwacht mindestens ein erster Sensor den dortigen Betriebsbereich und erzeugt entsprechende Sensordaten. Das korrespondiert mit dem verteilten Training, das somit dezentral an den mehreren Orten stattfindet. Im Rahmen des föderalen Lernens ist ein Ort jeweils einem der dezentralen Rechenknoten zugeordnet. Mit den Sensordaten des ersten Sensors soll das KI-Modell arbeiten, so dass es vorzugsweise reichhaltige Sensordaten wie Bilddaten einer Kamera oder Punktwolken eines Laserscanners oder einer 3D-Kamera sind. Dabei kann es an einem Ort mehrere oder sogar je nach Komplexität, insbesondere auf "plant level", sehr viele erste Sensoren auch untereinander unterschiedlicher Sensorprinzipien geben.

Ebenfalls überwacht ein klassisches Sicherheitssystem den Betriebsbereich an den mehreren Orten. Das klassische Sicherheitssystem weist dafür mindestens einen zweiten Sensor auf, ein zweiter Sensor ist demnach dem klassischen Sicherheitssystem und nicht dem KI-Modell zugeordnet. Erste und zweite Sensoren sollen am Ende in der Lage sein, die gleiche Sicherheitsanwendung zu lösen, also eine Sicherheitsbewertung zur Verhinderung von Unfällen auf dem geforderten Sicherheitsniveau vorzunehmen, können sich aber in Anzahl, Position und Art der Sensorik erheblich voneinander unterscheiden. Das klassische Sicherheitssystem gewinnt eine Sicherheitsbewertung mit dedizierten Algorithmen ohne maschinelles Lernen oder künstliche Intelligenz. Die Sicherheitsbewertung des klassischen Sicherheitssystems wird ausgenutzt, um die Sensordaten des ersten Sensors zum Zwecke der Nutzung als Trainingsbeispiele automatisch zu annotieren beziehungsweise zu labeln. Zu betonen ist, dass erster und zweiter Sensor eine Rolle bezeichnen, in der Zugehörigkeit zu dem KI-Modell beziehungsweise dem klassischen Sicherheitssystem. Physisch können es zumindest teilweise dieselben Sensoren sein, beispielsweise ein Kamerabild klassisch und beispielsweise mit Schutzfeldern ausgewertet und zugleich als Sensordaten für das Kl-Modell genutzt werden.

Damit stehen für ein jeweiliges lokales Kl-Modell an den mehreren Orten hochwertige annotierte Trainingsdaten zur Verfügung. Ziel des damit vorgenommenen Trainings des lokalen Kl-Modells, vorzugsweise eines überwachten Lernens (supervised learning), ist eine eigene Sicherheitsbewertung. Das lokale Kl-Modell ist vorzugsweise vorerst nicht produktiv, ohnehin solange es noch trainiert werden muss und auch danach, bis es für Sicherheitsanwendungen zertifiziert ist. Alternativ kann ein bereits produktives lokales Kl-Modell mit dem analogen Vorgehen nachtrainiert werden, wie später noch erläutert. Die lokalen KI-Modelle sind in ihrer grundsätzlichen Architektur vorzugsweise untereinander gleich und werden bevorzugt auch gleich initialisiert. Sie unterscheiden sich dann im Laufe des Trainings, weil sie mit unterschiedlichen Sensordaten ihres jeweiligen Ortes trainiert werden.

Bis hierhin gibt es somit dezentral an den mehreren Orten jeweilige erste Sensoren, lokale Kl-Modelle und klassische Sicherheitssysteme mit deren zweiten Sensoren, und die lokalen KI-Modelle werden asynchron auf die beschriebene Weise trainiert. Es sei wiederholt, dass physisch die zweiten Sensoren jedenfalls teilweise mit den ersten Sensoren übereinstimmen können. Die mehreren Orte können nahe beieinander liegen, etwa an benachbarten Maschinen, aber genauso kann das Trainieren auf verschiedene Hallen, Firmen, Standorte, Regionen oder auch Länder und Kontinente verteilt sein.

Die Erfindung geht von dem Grundgedanken aus, die verschiedenen lokalen Kl-Modelle an einem zentralen Ort zu sammeln und zu konsolidieren, um damit das gemeinsame Kl-Modell zu gewinnen. Diese Koordination und Verwaltung wird als Orchestrierung bezeichnet. Dazu werden die Trainingsergebnisse der lokalen KI-Modelle an einen Server übertragen, der in Anlehnung an seine Funktion als Orchestrierungsserver genannt wird. Kommuniziert werden nicht Trainingsdaten, sondern Trainingsergebnisse. Das können beispielsweise Gewichte, Gradienten oder sonstige Informationen zu den Trainingsergebnissen sein, bis hin zu vollständigen Kl-Modellen oder neuronalen Netzen. Es kommt nur darauf an, dass der Orchestrierungsserver ausreichend Informationen erhält, mit denen eine Teilhabe an dem jeweiligen lokalen Trainingsfortschritt möglich ist. Zur Frage der zu kommunizierenden Informationen ebenso wie der darauffolgenden Konsolidierung zu einem gemeinsamen KI-Modell wird ergänzend auf die Literatur zum föderalen Lernen verwiesen. Das gemeinsame KI-Modell entspricht vorzugsweise in seiner Architektur den lokalen Kl-Modellen. Es kann aus den lokalen Kl-Modellen sowohl erstmals erzeugt wie auch verbessert werden, sei es durch Fortschritte eines Nachtrainings von lokalen Kl-Modellen oder Einbeziehung von weiteren lokalen Kl-Modellen.

Das Verfahren ist ein computerimplementiertes Verfahren, das beispielsweise in Recheneinheiten der Sensoren und/oder daran angeschlossenen Recheneinheiten sowie in dem Orchestrierungsserver abläuft.

Die Erfindung hat den Vorteil, dass durch das verteilte Training Voraussetzungen für KIbasierte Sicherheitsfunktionen geschaffen werden. Es entsteht ein technisches Ökosystem zur Realisierung von KI-Funktionen im Kontext der funktionalen Sicherheit. Das umfasst komplexe Sensordaten, wie 3D-Bilddaten, und komplexe Funktionen, wie eine sichere Objektklassifikation, und es ist skalierbar sowohl hinsichtlich der Anzahl beteiligter Orte als auch der Größe der jeweiligen lokalen Sicherheitsanwendung bis hin zu "Plant-Level"-Sicherheitssystemen. Da nur Trainingsergebnisse und nicht beispielsweise Bilddaten üblicher Trainingsdatensätze kommuniziert werden, bleiben Geheimhaltungsinteressen, Persönlichkeitsrechte und Datenschutz gewahrt. In diesem Rahmen werden alle drei eingangs diskutierten Probleme adressiert. Erstens werden automatisch hochwertige, annotierte Trainingsdaten in einem weiten Spektrum von Einsatzszenarien gewonnen, so dass ein äußerst robustes und leistungsfähiges gemeinsames Kl-Modell entsteht. Zweitens wird mit den praktisch gleichen Mechanismen dessen Validierung entsprechend den strengen sicherheitstechnischen Maßstäben möglich (on-premise validation, Feldtest), wo dann entsprechend annotierte Sensordaten als Ground-Truth-Datensatz fungieren. Damit wird ein gefordertes Sicherheitsniveau trotz der Black-Box-Natur des gemeinsamen KI-Modells erreicht. Drittens ist ein kontinuierliches Monitoring zur Fehleraufdeckung ermöglicht, um einer Datendrift entgegenzuwirken, d.h. einer graduellen Veränderung der Realität gegenüber vergangenen Trainingsdaten und einer damit verbundenen Degradation des gemeinsamen KI-Modells.

Der Orchestrierungsserver überträgt bevorzugt das gemeinsame KI-Modell an mindestens einen Ort, wo es insbesondere als lokales KI-Modell fungiert. Übertragen eines KI-Modells bedeutet, dass ausreichend Informationen übertragen werden, um das KI-Modell nachzuvollziehen, in welcher Form auch immer. Das aus den Trainingsergebnissen der lokalen KI-Modelle erzeugte gemeinsame Kl-Modell wird damit an die Orte zurückgespielt und ersetzt dort vorzugsweise das bisherige lokale Kl-Modell. Der Ort profitiert somit von den Trainingsergebnissen der anderen Orte. Alternativ ist auch denkbar, das gemeinsame Kl-Modell an einen Ort zu schicken, der an dem verteilten Training nicht beteiligt war. Dabei wird davon ausgegangen, dass die Orte des Trainings reichhaltig genug waren, um eine Verallgemeinerung an weitere Orte zu erlauben. Nach der Übertragung ist somit an dem Ort das lokale Kl-Modell mit dem gemeinsamen KI-Modell identisch. Das kann sich dann im weiteren Verlauf durch lokale Anpassungen oder lokales Nachtrainieren wieder ändern.

Das lokale Kl-Modell wertet bevorzugt an mindestens einem Ort mit dem dortigen ersten Sensor aufgenommene Sensordaten aus, um eine Sicherheitsbewertung vorzunehmen und insbesondere bei Erkennung einer Gefahr eine Sicherheitsmaßnahme einzuleiten. Das lokale Kl-Modell ist hier das von dem Orchestrierungsserver erhaltene gemeinsame KI-Modell oder basiert jedenfalls darauf. Es ist damit in die Lage versetzt, den produktiven Betrieb (mit) zu übernehmen oder dies jedenfalls probeweise beispielsweise für eine Validierung zu tun. Im produktiven Betrieb wird dann insbesondere eine Sicherheitsmaßnahme eingeleitet, wenn die Sicherheitsbewertung eine Gefahr erkennt. Das kann beispielsweise das Anhalten oder Verlangsamen einer Maschine oder das Einleiten einer Ausweichbewegung sein. Das Verfahren zum verteilten Trainieren ist somit ein Anfangs- oder Zwischenschritt eines Verfahrens zum Überwachen eines jeweiligen Betriebsbereichs an den jeweiligen Orten mit dem gemeinsamen Kl-Modell beziehungsweise einer Abspaltung oder Kopie davon als lokales Kl-Modell.

Das klassische Sicherheitssystem nimmt bevorzugt zumindest vorübergehend an dem mindestens einen Ort weiterhin eine Sicherheitsbewertung vor. Insbesondere kann es Referenzorte geben, an denen das klassische Sicherheitssystem installiert und wenigstens zeitweise in Betrieb bleibt, während es an anderen Orten möglicherweise abgebaut oder dauerhaft inaktiv gesetzt wird und an nochmals anderen Orten nie ein klassisches Sicherheitssystem vorhanden war und ist. Die fortgesetzte Sicherheitsbewertung durch das klassische Sicherheitssystem, nachdem bereits ein gemeinsames KI-Modell als lokales Kl-Modell aufgespielt wurde, ermöglicht verschiedene Ausführungsformen, die nun erläutert werden.

Die Sicherheitsbewertungen des klassischen Sicherheitssystems und des lokalen Kl-Modells werden vorzugsweise miteinander verglichen. Ein erster denkbarer Zweck dafür ist eine Prüfung darauf, ob das lokale Kl-Modell aus Sensordaten der aktuellen realen Situation noch richtig umgeht. Sind sich klassisches Sicherheitssystem und lokales Kl-Modell uneins, so wird eine Datendrift vermutet. Das kann ein Trigger sein, um das lokale KI-Modell nachzutrainieren beziehungsweise ein verbessertes gemeinsames lokales KI-Modell bei dem Orchestrierungsserver anzufordern.

Bevorzugt wird eine Sicherheitsmaßnahme eingeleitet, wenn das klassische Sicherheitssystem oder das lokale Kl-Modell eine Gefahr erkennt. Es wäre unverantwortlich, auf eine erkannte Gefahr nicht zu reagieren, auch wenn sich klassisches Sicherheitssystem und lokales Kl-Modell nicht einig sind. Außerdem sind solche Situationen besonders wertvolle Trainingsbespiele. Wenn ferner das lokale Kl-Modell nicht allein für die Sicherheit verantwortlich ist, was es nach dem verteilten Training sein könnte, dann erhöht die diversitäre Redundanz der Überwachung das erreichbare Sicherheitsniveau.

Das lokale Kl-Modell wird bevorzugt anhand des Vergleichs validiert. Das lokale Kl-Modell ist zu diesem Zeitpunkt aus dem gemeinsamen Kl-Modell hervorgegangen, womit eigentlich letzteres validiert wird, dies vorzugsweise an mehreren Orten. Es werden mit anderen Worten Feldtests des gemeinsamen KI-Modells an mindestens einem Ort durchgeführt. Wie beim Training erzeugt das klassische Sicherheitssystem eine Sicherheitsbewertung zu Sensordaten des ersten Sensors. Das wird nun aber nicht für ein Training verwendet, ohne diese Möglichkeit im Rahmen eines Nachtrainings auszuschließen, sondern gibt die Erwartungshaltung für die Sicherheitsbewertung ("ground truth") des Kl-Modells vor. Ein solcher Feldtest geschieht zumindest weitgehend automatisch, so dass der Betriebsbereich weiterhin vom Zugang dort womöglich nicht erwünschter Personen beispielsweise des Betreibers des Orchestrierungsservers für die Durchführung von Feldtest frei bleibt.

Das gemeinsame Kl-Modell wird bevorzugt in einem iterativen Prozess optimiert, indem mindestens ein lokales Kl-Modell mit den Sensordaten und der Sicherheitsbewertung des jeweiligen Ortes nachtrainiert wird, Trainingsergebnisse des mindestens einen lokalen Kl-Modells an den Orchestrierungsserver übertragen werden und der Orchestrierungsserver anhand der Trainingsergebnisse das gemeinsame KI-Modell verbessert. Das beschreibt eine weitere Iteration des initialen Trainings, die auch mehrfach wiederholt werden kann, um das gemeinsame KI-Modell weiter zu optimieren und insbesondere gegenüber Datendrift nachzuführen. Die jeweilige Sicherheitsbewertung, die einem Trainingsdatensatz als Label zugeordnet wird, stammt von einem parallel zumindest vorübergehend eingesetzten klassischen Sicherheitssystem, von dem lokalen Kl-Modell oder aus sonstiger Quelle wie beispielsweise einer händischen Annotierung. Die Optimierungen können parallel zu einem bereits produktiven Betrieb eines lokalen Kl-Modells erfolgen. Vorzugsweise erfolgt das jeweilige lokale Nachtraining mit einer nichtproduktiven Kopie des lokalen Kl-Modells. Sind dann genug zusätzliche Trainingsdaten an genug Orten zusammengekommen, erzeugt der Orchestrierungsserver eine neue Version des gemeinsamen Kl-Modells und spielt sie an die Orte zurück, vorzugsweise nach erneuter Validierung und Zertifizierung. Für ein Nachtraining können gezielt bestimmte Bedingungen gestellt werden, etwa hinsichtlich der ersten Sensoren, deren Anordnung, der Betriebsbereiche, Objekteigenschaften, Anwendungen, Umwelteinflüsse und dergleichen, um die Trainingsbasis zu verbreitern oder ihr eine gewünschte Richtung zu geben.

Der erste Sensor erzeugt vorzugsweise Bilddaten. Insbesondere im Falle eines KI-Modells, das als neuronales Netz implementiert ist, gibt es eine Fülle von leistungsfähigen Architekturen und Lernverfahren, die so ausgenutzt werden. Neben einer herkömmlichen Kamera ist auch eine 3D-Kamera vorstellbar. Der erste Sensor ist vorzugsweise ein sicherer Sensor in dem Sinne, dass seine Bilddaten einem geforderten Sicherheitsniveau entsprechend verlässlich geliefert werden. Alternativ kann aber auch erst die Kombination von erstem Sensor und Kl-Modell bei für sich allein nicht sicherem erstem Sensor das geforderte Sicherheitsniveau erreichen.

Das klassische Sicherheitssystem weist bevorzugt ein Funkortungssystem (UWB, Ultrawideband) auf. Ein solches System wird beispielsweise in der einleitend genannten EP 3 859 382 A1 beschrieben. Das klassische Sicherheitssystem ist aber darauf nicht beschränkt, es kommt nur darauf an, dass eine Sicherheitsbewertung zu den Sensordaten des ersten Sensors geliefert wird, wofür sich beispielsweise auch eine Sicherheitskamera oder ein Sicherheitslaserscanner insbesondere mit Schutzfeldüberwachung und je nach Installation auch einfachere sichere Sensoren wie Sicherheitslichtgitter oder Türschalter eignen.

Die Sicherheitsbewertung umfasst bevorzugt eine sichere Objektklassifikation. Dafür gibt es keine allgemein funktionsfähige klassische Bildauswertung. Kl-basierte Lösungen waren bisher nicht mit funktionaler Sicherheit vereinbar, unter anderem weil reichhaltige Trainingsdaten von relevanten Absicherungssituationen fehlen. Genau diesen Schwachpunkt vermag die Erfindung unter anderem zu beheben. Ein klassisches Sicherheitssystem mit Personenkennung kann beispielsweise auf einem von der Person getragenen Transponder basieren, oder es gibt eine überwachte Zugangsbeschränkung. Auf derlei Hilfsmittel kann dann später verzichtet werden, wenn das KI-Modell die sichere Personenerkennung gelernt hat. Eine sichere Objektklassifikation ist nur ein, wenn auch wichtiges Beispiel einer sicheren Funktion. Wenn das klassische Sicherheitssystem eine andere sichere Funktion bereitstellt, wie die sichere Lokalisierung oder Bewegungsverfolgung, kann das ebenfalls gelernt werden, und solche sicheren Funktionen sind auch kombinierbar, etwa eine sichere Personenverfolgung. Besonders bevorzugt ist die Kombination als Tag-basiertes Funkortungssystem gemäß EP 3 859 382 A1, mit dem die sichere Personenerkennung umsetzbar ist. Dabei ist regelmäßig ein optisches Gate erforderlich, d.h. ein 3D-Kamerasystem, um den Zutritt von Personen zu überwachen, die kein Tag tragen, und dessen Bilddaten können dann in einer Doppelrolle des 3D-Kamerasystems als Teil des klassischen Systems und als Lieferant von Sensordaten für das Kl-Modell verwendet werden.

Das erfindungsgemäße Sicherheitssystem umfasst einen Orchestrierungsserver und mehrere Rechenknoten an jeweils einem von mehreren Orten, wobei der Orchestrierungsserver eine Server-Recheneinheit und eine erste Kommunikationsschnittstelle aufweist und die Rechenknoten eine jeweilige KI-Recheneinheit und zweite Kommunikationsschnittstelle aufweisen, so dass über die Kommunikationsschnittstellen Kl-Modelle oder Trainingsergebnisse von Kl-Modellen übertragbar sind. An den Orten sind mindestens ein jeweiliger erster Sensor zur Erzeugung von Sensordaten durch Überwachung eines jeweiligen Betriebsbereichs des Ortes und ein jeweiliges klassisches Sicherheitssystem zur Überwachung des jeweiligen Betriebsbereichs mit mindestens einem jeweiligen zweiten Sensor und zum Vornehmen einer Sicherheitsbewertung vorgesehen. Die jeweilige Kl-Recheneinheit ist dafür ausgebildet, ein jeweiliges lokales Kl-Modell mit den Sensordaten und der Sicherheitsbewertung des jeweiligen Ortes zu trainieren und Trainingsergebnisse der lokalen Kl-Modelle an den Orchestrierungsserver zu übertragen, wobei die Server-Recheneinheit dafür ausgebildet ist, anhand der Trainingsergebnisse das gemeinsame KI-Modell zu erzeugen oder zu verbessern. Mit anderen Worten führen der Orchestrierungsserver und die Rechenknoten das erfindungsgemäße Verfahren aus, und dies ist in allen beschriebenen Ausführungsformen möglich.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Ortes mit überwachtem Betriebsbereich, der einen Rechenknoten eines verteilten Trainings repräsentiert;
- Fig. 2: eine Übersichtsdarstellung eines verteilten Trainings mit einem Orchestrierungsserver und mehreren Rechenknoten;
- Fig. 3: ein beispielhaftes Ablaufschema eines initialen verteilten Trainings eines gemeinsamen KI-Modells;
- Fig. 4: ein beispielhaftes Ablaufschema einer doppelten Sicherheitsbewertung mit klassischem Sicherheitssystem und KI-Modell zur Validierung, Feststellung von Datendrift und/oder diversitär-redundanten Überwachung;
- Fig. 5: ein beispielhaftes Ablaufschema einer Sicherheitsüberwachung durch das trainierte Kl-Modell; und
- Fig. 6: ein beispielhaftes Ablaufschema für ein verteiltes Nachtraining des gemeinsamen Kl-Modells.

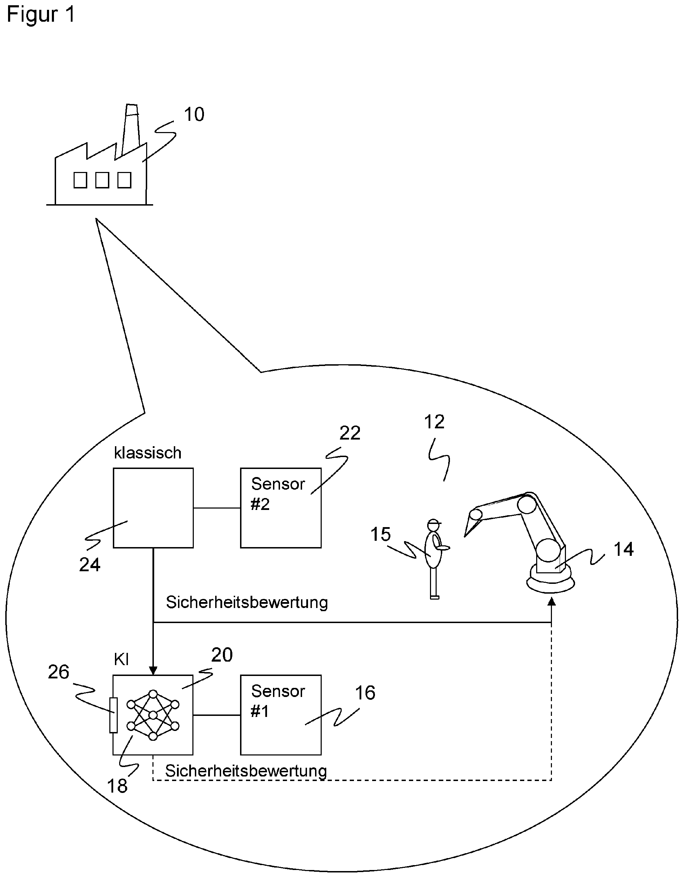

Figur 1 zeigt eine schematische Darstellung eines durch ein Fabriksymbol zusammengefassten Ortes 10 mit Betriebsbereich 12. In dem Betriebsbereich 12 befindet sich mindestens eine zu überwachende Gefahrenstelle oder Maschine 14, hier durch einen Roboterarm vertreten. Aufgabe der hier beschriebenen Sicherheitsüberwachung ist, Unfälle zwischen der Maschine 14 und einer möglicherweise in dem Betriebsbereich 12 befindlichen Person 15 zu verhindern. Im Endeffekt soll dafür ein erster Sensor 16 mit einer Auswertung durch ein lokales Kl-Modell 18, insbesondere ein (tiefes) neuronales Netz, in einer integrierten oder angeschlossenen KI-Recheneinheit 20 zuständig oder jedenfalls daran beteiligt sein. Das lokale Kl-Modell 18 muss aber für diese Aufgabe zuerst trainiert und, da es um Sicherheit geht, entsprechend dem angestrebten Sicherheitsniveau validiert beziehungsweise zertifiziert werden.

Um annotierte Trainingsdaten für das lokale Kl-Modell 18 zu gewinnen, ist zudem ein klassisches Sicherheitssystem mit einem zweiten Sensor 22 und einer klassischen Recheneinheit 24 vorgesehen. Das klassische Sicherheitssystem löst die Sicherheitsanwendung in einer an sich bekannten Weise. Dabei wird eine Sicherheitsbewertung vorgenommen, die einerseits bei Erkennung auf die Maschine 14 einwirkt, um die Gefahr auszuräumen, sie also anzuhalten, abzubremsen, ausweichen zu lassen oder was immer angemessen ist, um einen Unfall zu vermeiden. Die Sicherheitsbewertung fungiert andererseits als Label für zur gleichen Zeit aufgenommene Sensordaten des ersten Sensors 16, so dass dessen Sensordaten automatisch zu annotierten Trainingsdaten für das lokale Kl-Modell 18 werden.

Figur 1 zeigt die den ersten Sensor 16 und den zweiten Sensor 22 als jeweils eigene Einheit. Tatsächlich werden es in der Praxis häufig unterschiedliche Geräte sein. Es geht aber erst einmal nur um die funktionalen Rollen: der erste Sensor 16 ist dem Kl-Modell 18, der zweite Sensor 22 dem klassischen Sicherheitssystem zugeordnet. Physisch kann dasselbe Gerät beide Rollen füllen, beispielsweise eine Kamera oder 3D-Kamera, die innerhalb des Sicherheitssystems klassisch ausgewertet wird und zugleich die Bilddaten für das Kl-Modell liefert.

Die Erfindung basiert auf einem verteilten Trainingnach dem Prinzip des föderalen Lernens (federated learning). Nach Abschluss des Trainings, etwa nach Ablauf einer vorgegebenen Dauer oder Erreichen einer vorgegebenen Anzahl von Trainingsdatensätzen, wird das lokale Kl-Modell 18 noch nicht produktiv gesetzt. Vielmehr werden Informationen, die den Trainingsfortschritt weitergeben, also beispielsweise Gewichte eines neuronalen Netzes oder Gradienten eines Restfehlers, über eine Schnittstelle 26 an einen Orchestrierungsserver ausgegeben. Dort werden lokale Kl-Modelle 18 von mehreren Orten 10 gesammelt und in einem gemeinsamen KI-Modell konsolidiert, das dann wieder an die Orte 10 und/oder weitere Orte übertragen wird. Das verteilte Training wird später noch genauer erläutert. In den Begriffen des föderalen Lernens werden die Orte 10 als Rechenknoten bezeichnet, insbesondere die Kl-Recheneinheit 20.

Die Kl-Recheneinheit 20 und die klassische Recheneinheit 24 sind nicht auf eine bestimmte Hardware festgelegt. Vielmehr kann es sogar nur einen gemeinsamen oder sonst beliebig viele Hardwarebausteine geben, die die erforderlichen Rechen-, Kommunikations- und Speicherkapazitäten bereitstellen. Beispiele sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit), eine VPU (Video Processing Unit) oder dergleichen, ebenso wie ein Computer beliebiger Bauart einschließlich Notebooks, Smartphones, Tablets, einer (Sicherheits-)Steuerung und auch ein lokales Netzwerk, ein Edge-Device oder eine Cloud. Auch hinsichtlich der Kommunikationsverbindungen besteht eine große Auswahl, etwa Ethernet, I/O-Link, Bluetooth, WLAN, Wi-Fi, 3G/4G/5G und prinzipiell jeglicher industrietaugliche Standard.

Die Darstellung des Ortes 10 ist vereinfacht und rein beispielhaft. Der Betriebsort 12 kann wesentlich weitläufiger und komplexer sein und eine Vielzahl von Maschinen 14, wie Bearbeitungsmaschinen, Robotern, AGVs oder sonstigen Transportsystemen und dergleichen umfassen. Entsprechend werden dann nicht nur einzelne, sondern mehrere erste Sensoren 16 und zweite Sensoren 22 benötigt. Das geht bis zu einem "Plant-Level"-Sicherheitssystem, einem vernetzten Sicherheitssystem für ein ganzes Fabrik- oder Logistikgebäude, in dem die Sensorinformationen in Echtzeit gesammelt, sicherheitstechnisch bewertet und für die Steuerung, Optimierung und Risikominderung im Betriebsbereich 12 verwendet werden. Die geschilderten Grundprinzipien mit einer Annotierung anhand einer Sicherheitsbewertung des klassischen Sicherheitssystems und einem entsprechenden verteilten Training eines lokalen Kl-Modells 18 bleiben auch in dieser erhöhten lokalen Komplexität erhalten.

Entsprechend kann eine Vielfalt von ersten Sensoren 16 und zweiten Sensoren 22 eingesetzt werden. Als ein Beispiel ist der erste Sensor 16 eine Kamera oder 3D-Kamera, so dass das lokale Kl-Modell 18 Bilddaten bewertet. Bei einer 3D-Erfassung ist es von Vorteil, die erfassten Objekte mit Hilfe der Abstandswerte von einem nicht oder wenig veränderlichen Hintergrund abzutrennen. Das erleichtert die weitere Verarbeitung sowie die Verallgemeinerung auf andere Orte 10. Das klassische Sicherheitssystem kann beispielsweise ein Funkortungssystem wie in der EP 3 859 382 A1 sein. Das ist eine Möglichkeit, die wertvolle sichere Funktion Personenerkennung zu trainieren, die das klassische Sicherheitssystem anhand von Transpondern leistet und die das lokale Kl-Modell 18 dann auf Bilddaten anzuwenden lernt, so dass vorzugsweise nach dem Training auf die Transponder verzichtet werden kann. Es sind andere klassische Sicherheitssysteme verwendbar. Als Beispiel sei eine Durchgangstür mit Freigabe durch eindeutige Identifikationsmarken genannt. Es ist in diesem Zusammenhang zu betonen, dass erster Sensor 16 und zweiter Sensor 22 trotz Lösen derselben Sicherheitsfunktion nicht unbedingt die gleichen Erfassungsbereiche aufweisen. Beispielsweise kann der erste Sensor 16 die Maschine 14 beobachten, der zweite Sensor 22 jedoch die einzige Durchgangstür zu dieser Maschine 14, denn damit ist, wenn auch indirekt, ebenfalls sicher festgestellt, ob sich eine Person in der Nähe der Maschine 14 befindet.

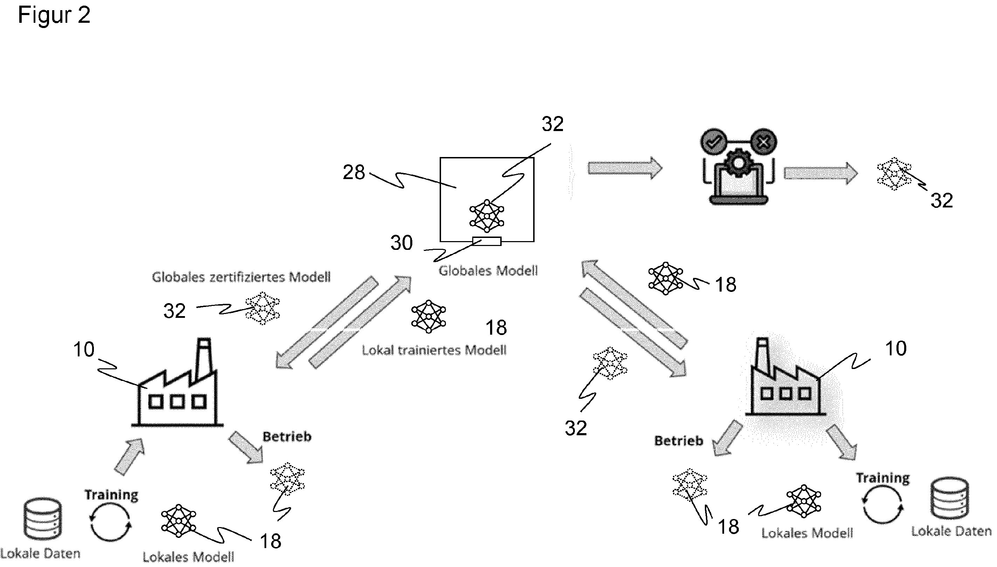

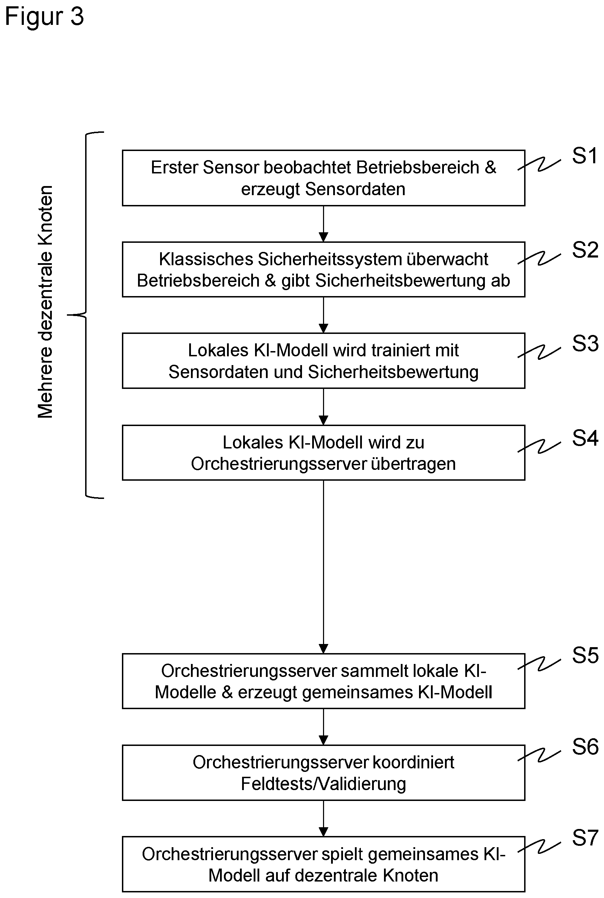

Figur 2 zeigt eine Übersichtsdarstellung eines verteilten Trainings mit einem Orchestrierungsserver 28 und mehreren Rechenknoten oder Orten 10. Der Orchestrierungsserver 28 weist eine Kommunikationsschnittstelle 30 sowie eine nicht gesondert dargestellte Server-Recheneinheit auf, für deren Hardware sinngemäß das gleiche gilt wie für die zuvor beschriebenen Recheneinheiten 20, 24. Die Orte 10 weisen die zu Figur 1 beschriebene Struktur auf, hier in Figur 2 ist der Ablauf des verteilten Trainings auf funktionaler Ebene illustriert. Das verteilte Training wird nun erst einmal in einem Gesamt-überblick beschrieben, bestimmte Abschnitte werden dann im Anschluss unter Bezugnahme auf die Figuren 3 bis 6 näher erläutert.

Anfangs werden an den Orten 10, also links und rechts unten in Figur 10, lokale KI-Modelle in der zu Figur 1 erläuterten Weise trainiert. Das lokale Kl-Modell kann bereits initial vortrainiert sein, so dass das Training vor Ort 10 in erster Linie einer Anpassung an die dortigen Gegebenheiten dient. Die Trainingsdaten können automatisiert neben dem normalen Betrieb gewonnen und annotiert werden und verbleiben als solche an den Orten 10. Zu diesem Zeitpunkt ist das lokale Kl-Modell noch nicht freigegeben und läuft sozusagen nicht-produktiv nebenher mit. Das ist durch eine dunklere Farbe des Kl-Modells dargestellt, im Gegensatz zu den späteren freigegebenen, produktiven Kl-Modellen.

Nach Abschluss des lokalen Trainings werden die daraus resultierenden Optimierungen an den Orchestrierungsserver 28 übertragen, der dafür eine Kommunikationsschnittstelle 30 aufweist. Im Gegensatz zu den Trainingsdaten selbst lassen die zu dem Orchestrierungsserver 28 übertragenen Informationen keine Rückschlüsse auf den Betriebsort 12 oder gar bestimmte Personen 15 zu, und daher können solche Informationen problemlos weitergegeben werden. Der Orchestrierungsserver 28 führt die Trainingsresultate der verschiedenen Orte 10 in einem globalen oder gemeinsamen KI-Modell 32 zusammen (Consensus). Das gemeinsame KI-Modell 32 kann dann zentral geprüft und zertifiziert werden. Anschließend wird es an die Orte 10 zurückgespielt und kann dort produktiv gesetzt werden. Als Zwischenschritt vor der Zertifizierung können Feldtests vor Ort 10 mit dem gemeinsamen Kl-Modell 32 durchgeführt werden, das erst anschließend zertifiziert und für den Produktivbetrieb zurückgespielt wird.

Es ist denkbar, das gemeinsame KI-Modell 32 auch an Orte 10 zu übertragen, die am verteilten Training nicht beteiligt waren, oder umgekehrt einen Teil der Orte 10 nur zum Training zu verwenden, ohne das gemeinsame Kl-Modell 32 dorthin zurückzuspielen. Das verteilte Training kann iterativ wiederholt werden, um das gemeinsame KI-Modell 32 zu erweitern, zu verbessern oder eine Datendrift zu berücksichtigen. Das föderale Lernen eignet sich in der sicherheitstechnischen Anwendung, weil es eine zentrale Entwicklung und gegebenenfalls Zertifizierung mit dezentralen und jedenfalls in Teilen unterschiedlichen Einsatzgebieten oder Orten 10 vernetzt. Dadurch können ein stetiger Hin- und Rückfluss von Informationen und Aspekte wie das Monitoring von Datendrift oder das großskalige Ausführen von Feldtests realisiert werden.

Figur 3 zeigt ein beispielhaftes Ablaufschema, um das initiale verteilte Training des gemeinsamen KI-Modells 32 noch etwas genauer zu betrachten. Die Verantwortung für die Sicherheit liegt in dieser Phase allein bei dem klassischen Sicherheitssystem. In einem Schritt S1 beobachtet der erste Sensor 16 den Betriebsbereich 12 und erzeugt Sensordaten. Parallel dazu überwacht in einem Schritt S2 auch das klassische Sicherheitssystem mit dem zweiten Sensor 22 den Betriebsbereich 12 und gibt eine Sicherheitsbewertung ab. In einem Schritt S3 wird das lokale Kl-Modell 18 mit den Sensordaten und der zugehörigen Sicherheitsbewertung des klassischen Sicherheitssystems als Label oder Annotierung trainiert. Dieses Training der Schritte S1 bis S3 setzt sich entsprechend einer Vorgabe fort, etwa einer bestimmten Dauer oder einer Anzahl von Trainingsschritten. Das lokale Kl-Modell 18 kann mit beliebigen Werten oder Zufallswerten initialisiert sein, oder es ist schon vortrainiert, beispielsweise mit Bildern beliebiger Quelle von Personen und sonstigen Objekten im Falle einer zu lernenden Personenerkennung. In einem Schritt S4 wird das trainierte lokale Kl-Modell 18 beziehungsweise eine Information, die den Trainingsfortschritt nachvollziehen lässt, an den Orchestrierungsserver 28 übertragen. Die Schritte S1 bis S4 werden an mehreren Orten 10 beziehungsweise in mehreren dezentralen Rechenknoten durchgeführt.

In einem Schritt S5 sammelt der Orchestrierungsserver 28 die Trainingsfortschritte der Orte 10 und erzeugt daraus das gemeinsame KI-Modell 32. Beispielsweise übermitteln die dezentralen Rechenknoten Gewichte eines neuronalen Netzes oder Gradienten des Restfehlers. Gewichte können gemittelt werden, womöglich mit unterschiedlichem Einfluss beispielsweise je nach Bedeutung eines Ortes 10 oder von dessen Anwendung, oder in Abhängigkeit von einer Anzahl in das jeweilige lokale Training eingeflossener Trainingsdatensätze. Ähnlich kann mit Gradienten verfahren werden, die dann beispielsweise in einem Backpropagation-Verfahren im Orchestrierungsserver 28 zu neuen Gewichten des gemeinsamen KI-Modells 32 verrechnet werden. Man kann die Beiträge der dezentralen Rechenknoten als (Mini-)Batches auffassen, dann funktioniert das Training des gemeinsamen KI-Modells 32 wie das bekannte Batchlernen, mit dem Unterschied, dass nicht ein größerer Trainingsdatensatz künstlich in Batches unterteilt wird, sondern die Batches von den verschiedenen Orten 10 beigesteuert werden. Weitere Ansätze zu der Konsolidierung in Schritt S5 können der Literatur zu föderalem Lernen entnommen werden.

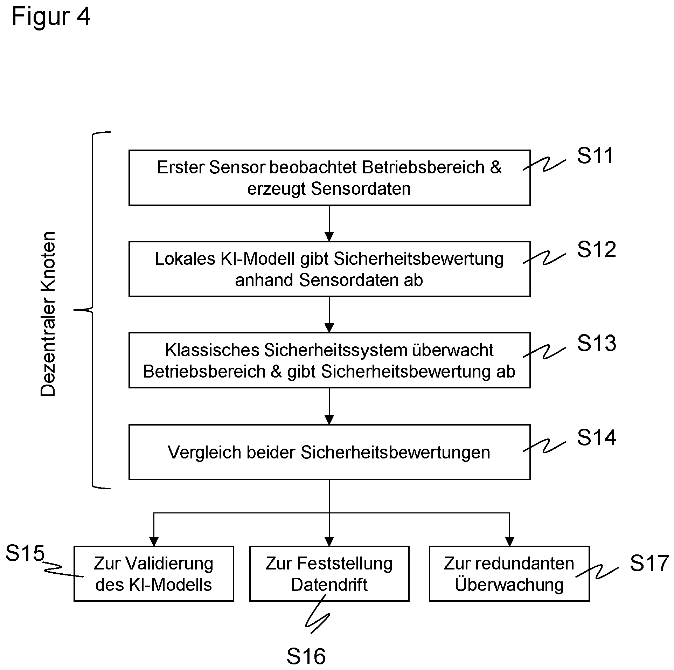

Der Orchestrierungsserver 28 koordiniert in einem optionalen Schritt S6 eine Validierung des gemeinsamen KI-Modells 32 durch Feldtests, wie im Anschluss unter Bezugnahme auf die Figur 4 erläutert. Um ein Sicherheitsniveau garantieren zu können, wird das gemeinsame Kl-Modell 32 aufgrund der Feldtests oder anderer Vorgaben zertifiziert.

In einem Schritt S7 wird das gemeinsame KI-Modell 32 an ausgewählte Orte 10 übertragen. Das können die gleichen Orte 10 sein, die in den Schritten S1 bis S4 lokale Kl-Modelle 18 beigetragen haben, es können aber einige dieser Orte 10 ausgelassen werden oder weitere Orte 10 hinzukommen. Das initiale Training ist damit beendet, es gibt verschiedene nun betrachtete Möglichkeiten, wie an den Orten 10 mit dem erhaltenen gemeinsamen KI-Modell 32 verfahren wird, das als neues lokales Kl-Modell 18 genutzt wird.

Figur 4 zeigt ein beispielhaftes Ablaufschema einer doppelten Sicherheitsbewertung mit klassischem Sicherheitssystem und lokalem KI-Modell 18. In einem Schritt S11 beobachtet der erste Sensor 16 den Betriebsbereich 12 und erzeugt Sensordaten. In einem Schritt S12 gibt das lokale Kl-Modell 18, das aus dem gemeinsamen KI-Modell 32 hervorgegangen ist, zu den Sensordaten eine Sicherheitsbewertung ab. Parallel dazu überwacht in einem Schritt S13 auch das klassische Sicherheitssystem mit dem zweiten Sensor 22 den Betriebsbereich 12 und gibt eine Sicherheitsbewertung ab. In einem Schritt S14 werden die beiden Sicherheitsbewertungen miteinander verglichen.

Dieser Vergleich kann nun alternativ oder kumulativ für drei Zwecke genutzt werden. In einem Schritt S15 wird so das lokale Kl-Modell 18 und in Folge das gemeinsame Kl-Modell 32 durch Feldtests validiert. In diesem Fall ist das lokale Kl-Modell 18 vorzugsweise noch nicht im produktiven Einsatz. Aufgrund der Sicherheitsbewertung des klassischen Sicherheitssystems in Schritt S13 ist bekannt, zu welchem Ergebnis das lokale Kl-Modell 18 kommen müsste. Mit demselben Mechanismus, mit dem Trainingsdaten durch das klassische Sicherheitssystem in Figur 3 automatisch annotiert werden, entsteht also nun eine Erwartungshaltung ("ground truth") für die Validierung in einem Feldtest. Die Vergleichsergebnisse beziehungsweise Resultate des Feldtests werden vorzugsweise an den Orchestrierungsserver 28 übertragen und dort von mehreren Orten 10 gesammelt. Dort kann das gemeinsame KI-Modell 32 dann im Erfolgsfall zertifiziert werden.

In einem Schritt S16 wird geprüft, ob das lokale Kl-Modell 18 noch korrekt funktioniert und nicht beispielsweise durch Datendrift signifikant an Erkennungsleistung verloren hat. In diesem Fall kann das lokale Kl-Modell 18 bereits im produktiven Einsatz sein. Wie bei der Validierung sollte ein korrekt arbeitendes Kl-Modell 18 die Sicherheitsbewertung des klassischen Sicherheitssystems reproduzieren. Ein solches Online-Monitoring kann auch umfeldspezifisch für einzelne Fertigungseinrichtungen oder Logistikbereiche durchgeführt werden. Wird eine Datendrift erkannt, so kann insbesondere ein Nachtraining erfolgen und, sofern die Sicherheit nicht mehr gewährleistet ist, mit einer entsprechenden Sicherheitsmaßnahme reagiert werden.

In einem Schritt S17 wird der parallele Einsatz von lokalem KI-Modell 18 und klassischem Sicherheitssystem für eine diversitär-redundante Überwachung genutzt. Das lokale Kl-Modell 18 ist in diesem Fall produktiv, aber nicht allein für die Sicherheit verantwortlich, sondern nur im Zusammenspiel mit dem klassischen Sicherheitssystem. Dadurch kann ein höheres Sicherheitsniveau erreicht werden. Das Auslösen einer Sicherheitsmaßnahme erfolgt typischerweise in einem logischen ODER, d.h. wenn eines der beiden Systeme eine Gefahr erkennt, wird vorsichtshalber abgesichert. Sind sich beide Systeme uneins, kann aber auch eines davon den Ausschlag geben, und jedenfalls sollte vorzugsweise nachgeprüft werden, woher die fehlende Übereinstimmung kommt, etwa durch ein Nachtrainieren.

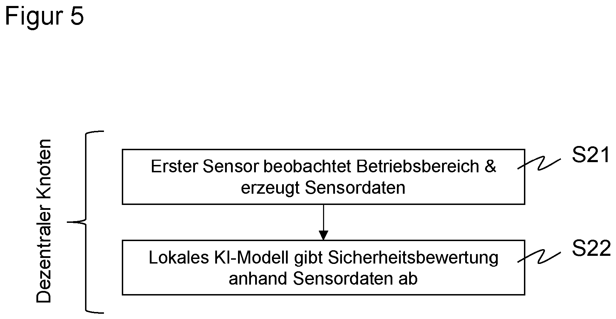

Figur 5 zeigt ein beispielhaftes Ablaufschema einer Sicherheitsüberwachung durch das trainierte gemeinsame KI-Modell 32, das als lokales Kl-Modell 18 an einen der Orte 10 übertragen wurde. In einem Schritt S21 beobachtet der erste Sensor 16 den Betriebsbereich 12 und erzeugt Sensordaten. In einem Schritt S32 gibt das lokale Kl-Modell 18, das aus dem gemeinsamen KI-Modell 32 hervorgegangen ist, zu den Sensordaten eine Sicherheitsbewertung ab. Diese entscheidet darüber, ob eine Sicherheitsmaßnahme ergriffen wird oder nicht. Das lokale Kl-Modell 18 hat somit die Verantwortung für die Sicherheit übernommen. Die Möglichkeit einer alternativen Überwachung gemeinsam mit dem klassischen Sicherheitssystem wurde schon zu Schritt S17 erwähnt.

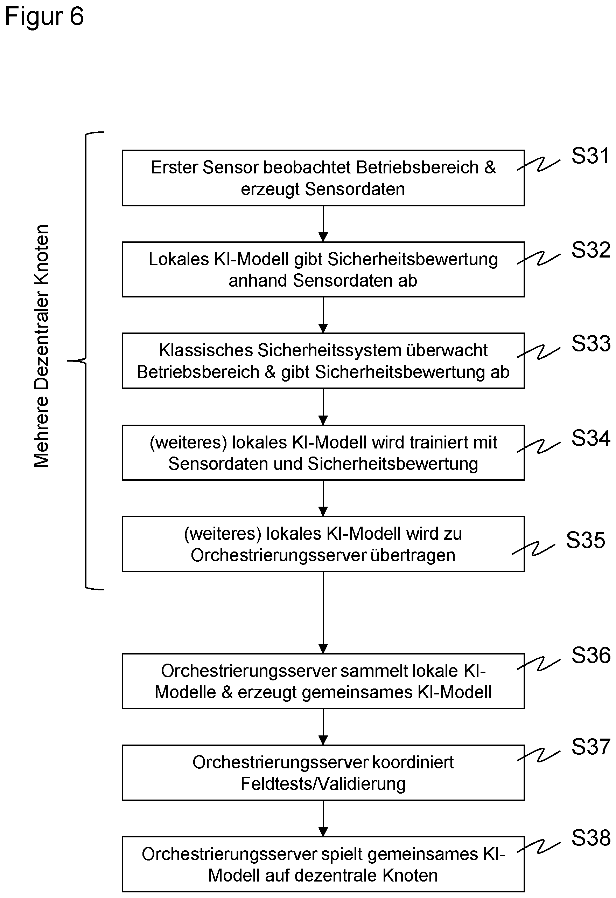

Figur 6 zeigt ein beispielhaftes Ablaufschema für ein verteiltes Nachtraining des gemeinsamen Kl-Modells. Das entspricht weitgehend dem Ablauf der Figur 3, wobei der Ausgangspunkt ein bereits verteilt trainiertes Kl-Modell ist, das eine eigene Sicherheitsbewertung vornimmt. Das Nachtrainieren kann iterativ wiederholt werden und als mitlaufender Prozess neben dem Betrieb zur stetigen Entwicklung und Optimierung des Kl-Modells verwendet werden.

In einem Schritt S31 beobachtet der erste Sensor 16 den Betriebsbereich 12 und erzeugt Sensordaten. In einem Schritt S32 gibt das lokale Kl-Modell 18, das aus dem gemeinsamen KI-Modell 32 hervorgegangen ist, zu den Sensordaten eine Sicherheitsbewertung ab. Parallel dazu überwacht in einem Schritt S33 auch das klassische Sicherheitssystem mit dem zweiten Sensor 22 den Betriebsbereich 12 und gibt eine Sicherheitsbewertung ab. Für den sicheren Betrieb und das Annotieren von Sensordaten des ersten Sensors 16 genügt alternativ nur einer der Schritte S32 oder S33. In einem Schritt S34 wird das lokale Kl-Modell 18 mit den derart gewonnenen annotierten Sensordaten trainiert. Vorzugsweise wird eine Kopie des lokalen Kl-Modells 18 trainiert, damit das bisherige lokale Kl-Modell 18 für den produktiven Betrieb unverändert verfügbar bleibt. Es ist grundsätzlich vorstellbar, das produktive Kl-Modell 18 selbst zu trainieren, aber das ist hinsichtlich des zu garantierenden Sicherheitsniveaus nicht unkritisch. In einem Schritt S35 werden die Trainingsfortschritte an den Orchestrierungsserver 28 übertragen. Die weiteren Schritte S36 bis S38 sind dann analog den Schritten S5 bis S7 der Figur 3, mit dem Unterschied, dass der Ausgangspunkt für das neue gemeinsame Kl-Modell 32 das bisherige gemeinsame KI-Modell 32 und kein frisch initiiertes oder bloß vortrainiertes gemeinsames KI-Modell 32 ist.

Statt das gemeinsame KI-Modell 32 nachzutrainieren, oder in Ergänzung dazu, können auch nur an bestimmten Orten 10 lokale Anpassungen für deren spezielle Bedürfnisse erfolgen. Das wird in der Literatur unter dem Stichwort "Multi-Task-Learning" beschrieben und kann beispielsweise dadurch umgesetzt werden, dass die vorderen Schichten eines neuronalen Netzes unverändert von dem gemeinsamen KI-Modell 32 übernommen und weiter hinten liegende Schichten mit Hilfe der lokalen Trainingsdaten individualisiert werden. So lässt sich ein lokales Kl-Modell 18 beispielsweise an eine spezielle Sensoranordnung, spezielle Umwelteinflüsse, spezielle Objekteigenschaften oder spezielle Aufgaben anpassen. Da hierzu lokale Trainingsdaten vorliegen, kann die angepasste Funktion zudem zielgerichtet für die relevanten Anwendungsfälle validiert werden.

## Patentansprüche

1. Computerimplementiertes Verfahren zum verteilten Trainieren eines gemeinsamen KI-Modells (32) für eine Sicherheitsüberwachung eines Betriebsbereichs (12) nach dem Prinzip des föderalen Lernens, wobei an mehreren Orten (10) mindestens ein jeweiliger erster Sensor (16) durch Überwachung eines jeweiligen Betriebsbereichs (12) Sensordaten erzeugt, an einem jeweiligen Ort (10) der mehreren Orte (10) ein jeweiliges klassisches Sicherheitssystem den jeweiligen Betriebsbereich (12) mit mindestens einem jeweiligen zweiten Sensor (22) überwacht und eine Sicherheitsbewertung vornimmt, ein jeweiliges lokales KI-Modell (18) mit den Sensordaten des jeweiligen Ortes (10) für eine Personenerkennung trainiert wird, Trainingsergebnisse der lokalen Kl-Modelle (18) an einen Orchestrierungsserver (28) übertragen werden und der Orchestrierungsserver (28) anhand der Trainingsergebnisse das gemeinsame KI-Modell (32) erzeugt oder verbessert,
**dadurch gekennzeichnet,**
**dass** die jeweiligen lokalen Kl-Modelle (18) mit der Sicherheitsbewertung des jeweiligen Ortes (10) trainiert werden, wobei die Sicherheitsbewertung ausgenutzt wird, um die Sensordaten des jeweiligen Ortes (10) zum Zwecke der Nutzung als Trainingsbeispiele automatisch zu annotieren beziehungsweise zu labeln, und dass der Betriebsbereich (12) eine Maschine und/oder deren Umgebung in einer Fabrik oder Logistikhalle umfasst.

2. Verfahren nach Anspruch 1,
wobei der Orchestrierungsserver (28) das gemeinsame Kl-Modell (32) an mindestens einen Ort (10) überträgt, wo es insbesondere als lokales Kl-Modell (18) fungiert.

3. Verfahren nach Anspruch 2,
wobei das lokale Kl-Modell (18) an mindestens einem Ort (10) mit dem dortigen ersten Sensor (16) aufgenommene Sensordaten auswertet, um eine Sicherheitsbewertung vorzunehmen und insbesondere bei Erkennung einer Gefahr eine Sicherheitsmaßnahme einzuleiten.

4. Verfahren nach Anspruch 2 oder 3,
wobei das klassische Sicherheitssystem zumindest vorübergehend an dem mindestens einen Ort (10) weiterhin eine Sicherheitsbewertung vornimmt.

5. Verfahren nach Anspruch 4,
wobei die Sicherheitsbewertungen des klassischen Sicherheitssystems und des lokalen Kl-Modells (18) miteinander verglichen werden.

6. Verfahren nach Anspruch 5,
wobei eine Sicherheitsmaßnahme eingeleitet wird, wenn das klassische Sicherheitssystem oder das lokale Kl-Modell (18) eine Gefahr erkennt.

7. Verfahren nach Anspruch 5,
wobei das lokale Kl-Modell (18) anhand des Vergleichs validiert wird.

8. Verfahren nach einem der vorhergehenden Ansprüche,
wobei das gemeinsame KI-Modell (32) in einem iterativen Prozess optimiert wird, indem mindestens ein lokales Kl-Modell (18) mit den Sensordaten und der Sicherheitsbewertung des jeweiligen Ortes (10) nachtrainiert wird, Trainingsergebnisse des mindestens einen lokalen Kl-Modells (18) an den Orchestrierungsserver (32) übertragen werden und der Orchestrierungsserver (28) anhand der Trainingsergebnisse das gemeinsame KI-Modell (32) verbessert.

9. Verfahren nach einem der vorhergehenden Ansprüche,
wobei der erste Sensor (16) Bilddaten erzeugt.

10. Verfahren nach einem der vorhergehenden Ansprüche,
wobei das klassische Sicherheitssystem ein Funkortungssystem aufweist.

11. Verfahren nach einem der vorhergehenden Ansprüche,
wobei die Sicherheitsbewertung eine sichere Objektklassifikation umfasst.

12. Sicherheitssystem zum verteilten Trainieren eines gemeinsamen KI-Modells (32) für eine Sicherheitsüberwachung eines Betriebsbereichs (12) nach dem Prinzip des föderalen Lernens, mit einem Orchestrierungsserver (28) und mit mehreren Rechenknoten an jeweils einem von mehreren Orten (10), wobei der Orchestrierungsserver (28) eine Server-Recheneinheit und eine erste Kommunikationsschnittstelle (30) aufweist und die Rechenknoten eine jeweilige Kl-Recheneinheit (20) und zweite Kommunikationsschnittstelle (26) aufweisen, so dass über die Kommunikationsschnittstellen Kl-Modelle (18, 32) oder Trainingsergebnisse von Kl-Modellen (18, 32) übertragbar sind, und an den Orten (10) mindestens ein jeweiliger erster Sensor (16) zur Erzeugung von Sensordaten durch Überwachung eines jeweiligen Betriebsbereichs (16) des Ortes (10) und ein jeweiliges klassisches Sicherheitssystem zur Überwachung des jeweiligen Betriebsbereichs (12) mit mindestens einem jeweiligen zweiten Sensor (22) und zum Vornehmen einer Sicherheitsbewertung vorgesehen ist, wobei die jeweilige Kl-Recheneinheit (20) dafür ausgebildet ist, ein jeweiliges lokales Kl-Modell (18) mit den Sensordaten des jeweiligen Ortes (10) für eine Personenerkennung zu trainieren und Trainingsergebnisse der lokalen Kl-Modelle (18) an den Orchestrierungsserver (28) zu übertragen, und wobei die Server-Recheneinheit dafür ausgebildet ist, anhand der Trainingsergebnisse das gemeinsame Kl-Modell (18) zu erzeugen oder zu verbessern
**dadurch gekennzeichnet,**
**dass** die jeweilige Kl-Recheneinheit (20) dafür ausgebildet ist, das jeweilige lokale Kl-Modell (18) mit der Sicherheitsbewertung des jeweiligen Ortes (10) zu trainieren, wobei die Sicherheitsbewertung ausgenutzt wird, um die Sensordaten des jeweiligen Ortes (10) zum Zwecke der Nutzung als Trainingsbeispiele automatisch zu annotieren beziehungsweise zu labeln, und dass der Betriebsbereich (12) eine Maschine und/oder deren Umgebung in einer Fabrik oder Logistikhalle umfasst.

## Claims

1. A computer-implemented method for a distributed training of a common AI model (32) for a safety monitoring of an operating zone (12) in accordance with the principle of federated learning, wherein at least one respective first sensor (16) generates sensor data by monitoring a respective operating zone (12) at a plurality of locations (10); a respective classical safety system monitors the respective operating zone (12) by at least one respective second sensor (22) at a respective location (10) of the plurality of locations (10) and carries out a safety evaluation; a respective local Al model (18) is trained with the sensor data of the respective location (10) for a person recognition; training results of the local AI models (18) are transmitted to an orchestration server (28) and the orchestration server (28) generates or improves the common Al model (32) using the training results,
**characterized in that**
the respective local Al models (18) are trained with the safety evaluation of the respective location (10), with the safety evaluation being used to automatically annotate or label the sensor data of the respective location (10) for the purpose of use as training examples, and **in that** the operating zone (12) comprises a machine and/or its environment in a factory or a logistics center.

2. A method in accordance with claim 1,
wherein the orchestration server (28) transmits the common Al model (32) to at least one location (10) where it in particular acts as a local Al model (18).

3. A method in accordance with claim 2,
wherein, at at least one location (10), the local Al model (18) evaluates sensor data recorded by the first sensor (16) there to carry out a safety evaluation and in particular to introduce a safety measure on recognition of a hazard.

4. A method in accordance with claim 2 or claim 3,
wherein the classical safety system furthermore carries out a safety evaluation at least temporarily at the at least one location (10).

5. A method in accordance with claim 4,
wherein the safety evaluations of the classical safety system and of the local Al model (18) are compared with one another.

6. A method in accordance with claim 5,
wherein a safety measure is initiated when the classical safety system or the local Al model (18) recognizes a hazard.

7. A method in accordance with claim 5,
wherein the local Al model (18) is validated using the comparison.

8. A method in accordance with any one of the preceding claims,
wherein the common AI model (32) is optimized in an iterative process in that at least one local AI model (18) is subsequently trained with the sensor data and the safety evaluation of the respective location (10), training results of the at least one local AI model (18) are transmitted to the orchestration server (28), and the orchestration server (28) improves the common AI model (32) using the training results.

9. A method in accordance with any one of the preceding claims,
wherein the first sensor (16) generates image data.

10. A method in accordance with any one of the preceding claims,
wherein the classical safety system has a radio location system.

11. A method in accordance with any one of the preceding claims,
wherein the safety evaluation comprises a safe object classification.

12. A safety system for the distributed training of a common AI model (32) for a safety monitoring of an operating zone (12) in accordance with the principle of federated learning, using an orchestration server (28) and having a plurality of nodes at a respective one of a plurality of locations (10), wherein the orchestration server (28) has a server processing unit and a first communication interface (30) and the nodes have a respective AI processing unit (20) and a second communication interface (26) so that Al models (18, 32) or training results of Al models (18, 32) can be transmitted over the communication interfaces, and at least one respective first sensor (16) for the generation of sensor data by monitoring a respective operating zone (16) of the location (10) and a respective classical safety system for monitoring the respective operating zone (16) by at least one respective second sensor (22) and for carrying out a safety evaluation are provided at the locations (10), wherein the respective AI processing unit (20) is configured to train a respective local Al model (18) with the sensor data of the respective location (10) for a person recognition, and to transmit training results of the local AI models (18) to the orchestration server (28), and wherein the server processing unit is configured to generate or to improve the common Al model (18) using the training results,
**characterized in that**
the respective AI processing unit (20) is configured to train the respective local Al model (18) with the safety evaluation of the respective location (10), with the safety evaluation being used to automatically annotate or label the sensor data of the respective location (10) for the purpose of use as training examples, and **in that** the operating zone (12) comprises a machine and/or its environment in a factory or a logistics center.

## Revendications

1. Procédé mis en œuvre par ordinateur pour l'entraînement réparti d'un modèle d'IA commun (32), destiné à la surveillance de sécurité d'une zone d'opération (12), selon le principe de l'apprentissage fédéré, dans lequel
à plusieurs sites (10), au moins un premier capteur respectif (16) génère des données de capteur en surveillant une zone d'opération (12),
à un site respectif (10) parmi lesdits plusieurs sites (10), un système de sécurité classique respectif surveille la zone d'opération respective (12) à l'aide d'au moins un second capteur respectif (22) et procède à une évaluation de sécurité,
un modèle d'IA local respectif (18) est entraîné avec les données de capteur du site respectif (10) pour la détection de personnes,
les résultats d'entraînement des modèles d'IA locaux (18) sont transmis à un serveur d'orchestration (28), et
le serveur d'orchestration (28) génère ou améliore le modèle d'IA commun (32) sur la base des résultats d'entraînement,
**caractérisé en ce que**
les modèles d'IA locaux respectifs (18) sont entraînés avec l'évaluation de sécurité du site respectif (10), l'évaluation de sécurité servant à annoter ou étiqueter automatiquement les données de capteur du site respectif (10) afin de les utiliser à titre d'exemples d'entraînement, et
**en ce que** la zone d'opération (12) comprend une machine et/ou son environnement dans une usine ou dans un bâtiment logistique.

2. Procédé selon la revendication 1,
dans lequel le serveur d'orchestration (28) transmet le modèle d'IA commun (32) à au moins un site (10) où il fait office notamment de modèle d'IA local (18).

3. Procédé selon la revendication 2,
dans lequel, à au moins un site (10), le modèle d'IA local (18) évalue les données de capteur acquises par le premier capteur (16) y prévu, afin de procéder à une évaluation de sécurité et, en particulier, de déclencher une mesure de sécurité en cas de détection d'un danger.

4. Procédé selon la revendication 2 ou 3,
dans lequel le système de sécurité classique procède, à son tour, à une évaluation de sécurité, au moins temporairement, audit au moins un site (10).

5. Procédé selon la revendication 4,
dans lequel les évaluations de sécurité du système de sécurité classique et du modèle d'IA local (18) sont comparées l'une à l'autre.

6. Procédé selon la revendication 5,
dans lequel une mesure de sécurité est déclenchée si le système de sécurité classique ou le modèle d'IA local (18) détecte un danger.

7. Procédé selon la revendication 5,
dans lequel le modèle d'IA local (18) est validé sur la base de la comparaison.

8. Procédé selon l'une des revendications précédentes,
dans lequel le modèle d'IA commun (32) est optimisé par un processus itératif consistant à réentraîner au moins un modèle d'IA local (18) avec les données de capteur et avec l'évaluation de sécurité du site respectif (10), à transmettre les résultats d'entraînement dudit au moins un modèle d'IA local (18) au serveur d'orchestration (32), et à améliorer le modèle d'IA commun (32) par le serveur d'orchestration (28) sur la base des résultats d'entraînement.

9. Procédé selon l'une des revendications précédentes,
dans lequel le premier capteur (16) génère des données d'image.

10. Procédé selon l'une des revendications précédentes,
dans lequel le système de sécurité classique comprend un système de radiolocalisation.

11. Procédé selon l'une des revendications précédentes,
dans lequel l'évaluation de sécurité comprend une classification d'objets sécurisée.

12. Système de sécurité pour l'entraînement réparti d'un modèle d'IA commun (32), destiné à la surveillance de sécurité d'une zone d'opération (12), selon le principe de l'apprentissage fédéré, comprenant un serveur d'orchestration (28) et plusieurs nœuds de calcul respectivement à l'un parmi plusieurs sites (10),
dans lequel le serveur d'orchestration (28) comprend une unité de calcul serveur et une première interface de communication (30), et les nœuds de calcul comprennent chacun une unité de calcul d'IA (20) et une seconde interface de communication (26), permettant de transmettre des modèles d'IA (18, 32) ou des résultats d'entraînement de modèles d'IA (18, 32) via les interfaces de communication, et
auxdits sites (10) est prévu au moins un premier capteur respectif (16) pour générer des données de capteur en surveillant la zone d'opération respective (16) du site (10), et il est prévu un système de sécurité classique respectif pour surveiller la zone d'opération respective (12) à l'aide d'au moins un second capteur respectif (22) et pour procéder à une évaluation de sécurité,
l'unité de calcul d'IA respectif (20) est conçue pour entraîner un modèle d'IA local respectif (18) avec les données de capteur du site respectif (10) pour la détection de personnes et pour transmettre les résultats d'entraînement des modèles d'IA locaux (18) au serveur d'orchestration (28), et
l'unité de calcul du serveur est conçue pour générer ou améliorer le modèle d'IA commun (18) sur la base des résultats d'entraînement,
**caractérisé en ce que**
l'unité de calcul d'IA respective (20) est conçue pour entraîner le modèle d'IA local respectif (18) avec l'évaluation de sécurité du site respectif (10), sachant que l'évaluation de sécurité sert à annoter ou étiqueter automatiquement les données de capteur du site respectif (10) afin de les utiliser à titre d'exemples d'entraînement, et
**en ce que** la zone d'opération (12) comprend une machine et/ou son environnement dans une usine ou dans un bâtiment logistique.
